Europäisches Patentamt

European Patent Office

Office européen des brevets

(19)

(11) Veröffentlichungsnummer : **0 126 310**
**B1**

(12) # EUROPÄISCHE PATENTSCHRIFT

(45) Veröffentlichungstag der Patentschrift :
29.07.87

(51) Int. Cl.⁴ : **A 23 K   1/18**

(21) Anmeldenummer : **84104508.1**

(22) Anmeldetag : **19.04.84**

(54) Mineralisches Beifutter für Vögel.

(30) Priorität : **21.04.83 DE 3314556**

(43) Veröffentlichungstag der Anmeldung :
**28.11.84 Patentblatt 84/48**

(45) Bekanntmachung des Hinweises auf die Patenterteilung : **29.07.87 Patentblatt 87/31**

(84) Benannte Vertragsstaaten :
**BE CH DE FR GB LI NL**

(56) Entgegenhaltungen :
**DE-A- 2 924 002**

(73) Patentinhaber : **Merkl, Alfred
Fenitzerstrasse 27
D-8500 Nürnberg (DE)**

(72) Erfinder : **Merkl, Alfred
Fenitzerstrasse 27
D-8500 Nürnberg (DE)**

(74) Vertreter : **Wey, Hans-Heinrich, Dipl.-Ing. et al
Patentanwälte Müller-Börner Wey & Körner Widenmayerstrasse 49
D-8000 München 22 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung sind ein mineralisches Beifutter für Vögel sowie ein Verfahren zu seiner Herstellung gemäß den Patentansprüchen.

Aus der DE-A-2 924 002 sind blockartige Vogelfutterkörper bekannt, die aus vogelartspezifischen Körnern und Zusätzen, wie Vitaminen, Mineralien od. dgl. bestehen, wobei die Körner und die Zusatzstoffe mittels Wasserglas miteinander verbunden sind.

Der Erfindung liegt jedoch die Aufgabe zugrunde, das vorwiegend aus Körnern bestehende Vogelfutter durch ein mineralisches Beifutter zu ergänzen, um den Mineralstoffbedarf der Tiere zu decken. Insbesondere bei Ziervögeln erhebt sich dieses Problem, da in Freiheit lebende Vögel bei der Futtersuche Spurenelemente enthaltende Mineralien mit aufnehmen, während Käfigvögel auf das durch den Menschen verabreichte Futter angewiesen sind. Der Mineralstoffbedarf eines Vogels beträgt etwa 3 % der Gesamtfuttermenge.

Als mineralisches Ausgangsmaterial für ein in diesem Sinne geeignetes Beifutter hat sich nun kohlensaurer Algenkalk herausgestellt, der zahlreiche Spurenelemente neben dem Calcium enthält. Das erfindungsgemäße mineralische Beifutter besteht deshalb im wesentlichen aus solchem kohlensaurem Algenkalt, und zwar in Form von Körnern mit einem mittleren Durchmesser von etwa 0,4 bis 3 mm, also einer Größe, die von den Vögeln leicht aufgenommen werden kann.

Da jedoch im kohlensauren Algenkalk die Kationen Natrium und Kalium nicht in ausreichender Menge vorhanden sind, bestand die Aufgabe, den kohlensauren Algenkalk in geeigneter Weise mit diesen Elementen anzureichern, um die Tiere auch mit diesen Stoffen genügend versorgen zu können. Deshalb sind die vorstehend beschriebenen Algenkalkkörner erfindungsgemäß dadurch erhalten, daß man sie in geeigneter Weise mit Natrium- und/oder Kaliumwasserglas überzieht und den Überzug anschließend trocknet. Dabei macht das Gewicht des Wasserglasüberzuges etwa 6 bis 15 % des Gesamtgewichts der Körner aus. Während der Trocknung wird aus der Luft CO₂ aufgenommen, welches mit dem Wasser der wäßrigen Lösung Kohlensäure (H₂CO₃) bildet. Da diese eine stärkere Säure als die der Alkalisilikatlösung zugrunde liegende Kieselsäure ist, wird diese aus ihren Salzen freigesetzt und scheidet sich dabei in Form eines wasserhaltigen Gels veränderlicher chemischer Zusammensetzung ab, das bei fortschreitender Trocknung an der Luft unter Wasserabgabe schließlich in SiO₂ übergeht. Dieses Trocknungsprodukt kann somit nicht nur die gewünschte Anreicherung der Algenkalkkörner mit Natrium und/oder Kalium bewirken, sondern erforderlichfalls auch eine Bindung zwischen den einzelnen Körnern. Durch Steuerung des Trocknungsverfahrens kann man somit streufähiges Material oder auch Blöcke erhalten.

Wenn beispielsweise ein Beifutter gemäß der Erfindung in streufähiger Form erwünscht ist, kann man die kohlensauren Algenkalkkörner der gewünschten Größe vorhangartig herabrieseln lassen und diesen frei fallenden « Vorhang » von der Seite her mit Natrium- und/oder Kaliumwasserglas einsprühen in der Weise, daß die fertigen Körner nach geeigneter Trocknung das vorstehend erläuterte Trocknungsprodukt als Überzug enthalten. Es kann auch angebracht sein, die Körner vor dem Besprühen mit Wasserglas in geeignetem Maße zu erwärmen, um nach der Trocknung die gewünschte Aushärtung zu erzielen. Aber auch jede andere Methode ist geeignet, mit der es möglich ist, Algenkalkkörner geeigneter Größe mit einer Überzugsschicht aus dem vorstehend erläuterten Trocknungsprodukt des Wasserglases zu überziehen.

Das mineralische Beifutter für Vögel gemäß der Erfindung enthält somit sämtliche mineralischen Stoffe in vorteilhafter Zusammensetzung und Darreichungsform, die für die Gesundheit und das Wohlbefinden der Tiere erforderlich sind.

## Patentansprüche

1. Mineralisches Beifutter für Vögel, erhältlich durch Überziehen von Körnern aus kohlensaurem Algenkalk, die einen mittleren Durchmesser von etwa 0,4 bis 3 mm aufweisen, mit Natrium- und/oder Kaliumwasserglas und anschließendes Trocknen des Überzuges.

2. Beifutter nach Anspruch 1, dadurch gekennzeichnet, daß das Gewicht des Wasserglasüberzuges etwa 6 bis 15 % des Gesamtgewichts der Körner ausmacht.

3. Verfahren zur Herstellung des mineralischen Beifutters für Vögel nach Anspruch 1 und 2, dadurch gekennzeichnet, daß man kohlensaure Algenkalkkörner mit einem mittleren Durchmesser von etwa 0,4 bis 3 mm in einer dünnen Schicht frei fallen läßt und während ihres freien Falles von wenigstens einer Seite her mit Natrium- und/oder Kaliumwasserglas besprüht und anschließend in einem Luftstrom trocknet.

4. Verfahren nach Anspruch 3, dadurch gekennzeichnet, daß man die kohlenwauren Algenkalkkörner vor dem Besprühen mit Wasserglas erwärmt.

## Claims

1. Mineral additional feed for birds, obtainable by coating kernels of carbonate algae lime having an average diameter of approximately 0.4 to 3 mm, with sodium and/or potassium water glass and subsequently drying the coating.

2. Additional feed according to claim 1, characterized in that the weight of the water glass coating amounts to approximately 6 to 15 % of the total weight of the kernels.

3. Method of producing the mineral additional feed for birds according to claim 1 and 2, characterized in that carbonate algae lime kernels with an average diameter of 0.4 to 3 mm are allowed to fall freely in a thin layer, and during their free fall are sprayed from at least one side with sodium and/or potassium water glass and are subsequently dried in an air stream.

4. Method according to claim 3, characterized in that the carbonate algae lime kernels are heated prior to being sprayed with water glass.

**Revendications**

1. Complément alimentaire minéral pour oiseaux pouvant être obtenu par revêtement de grains de carbonate de calcium d'algues ayant un diamètre moyen d'environ 0,4 à 3,0 mm avec du silicate de sodium et/ou du silicate de potassium, puis séchage du revêtement.

2. Complément alimentaire selon la revendication 1, caractérisé en ce que la masse du revêtement de silicate alcalin représente environ 6 à 15 % de la masse totale des grains.

3. Procédé de fabrication du complément alimentaire minéral pour oiseaux selon les revendications 1 et 2, caractérisé en ce qu'on fait tomber en chute libre en une couche mince des grains de carbonate de calcium d'algues ayant un diamètre moyen d'environ 0,4 à 3,0 mm et, pendant leur chute libre, les arrose d'au moins un côté de silicate de sodium et/ou de silicate de potassium, puis les sèche dans un courant d'air

4. Procédé selon la revendication 3, caractérisé en ce qu'on chauffe les grains de carbonate de calcium d'algues avant de les arroser de silicate alcalin.